# EUROPEAN PATENT SPECIFICATION

(11) **EP 4 667 148 B1**
(45) Date of publication and mention of the grant of the patent: **25.11.2026**
(21) Application number: 24760363.2
(22) Date of filing: 20.02.2024
(51) Int. Cl.: B23K 35/26, B23K 35/02, C22C 13/00, C22C 13/02, B23K 1/19

(54) **SOLDER ALLOY, SOLDER BALL, SOLDER PASTE, AND SOLDER JOINT**
LÖTLEGIERUNG, LÖTKUGEL, LÖTPASTE UND LÖTVERBINDUNG
ALLIAGE DE SOUDURE, BILLE DE SOUDURE, PÂTE DE SOUDURE ET JOINT SOUDÉ

(30) Priority: 21.02.2023 JP 2023025650
(43) Date of publication of application: 24.12.2025
(73) Proprietor: Senju Metal Industry Co., Ltd., Tokyo 120-8555 (JP)
(72) Inventor: YOKOYAMA, Takahiro, Tokyo 120-8555 (JP); YOSHIKAWA, Shunsaku, Tokyo 120-8555 (JP); SUZUKI, Shigeto, Tokyo 120-8555 (JP)
(74) Representative: Zimmermann & Partner Patentanwälte mbB
(86) International application number: PCT/JP2024/006028
(87) International publication number: WO 2024/177065

(56) References cited:
- EP-A1- 3 476 520
- EP-A1- 3 590 652
- WO-A1-2020/031361
- JP-A- 2007 237 251
- JP-A- 2008 168 322
- JP-A- 2009 082 986
- JP-A- 2017 170 465
- JP-A- 2019 058 950
- JP-A- 2022 002 855

## Description

### Technical Field

The present invention relates to a solder alloy, a solder ball, a solder paste, and to the use of the solder alloy in a solder joint for various electronic devices.

### Background Art

In recent years, electronic devices such as mobile terminals have been enhanced in functionality, and the performance of electronic components mounted on boards has been dramatically improved. Since larger currents are applied to the electronic components as electronic components become higher in performance, the solder joint used for the board of the electronic device is exposed to a high temperature by Joule heat. On the other hand, when the electronic device is used in a cold district, the solder joint is exposed to a low temperature environment.

As a solder alloy constituting a solder joint, an Sn-3Ag-0.5Cu solder alloy is widely used. In a use environment where power consumption is small and a temperature change is small as in the conventional case, use of this solder alloy does not cause a big problem. However, in recent years, as the application range of the solder alloy has expanded, usage environments thereof have become more severe, and a problem has arisen in reliability. As described above, as the temperature at the time of energization increases due to higher performance of electronic components, the temperature difference at the time of exposure to the outside air in a cold district increases. Similarly, when the electronic component is used indoors after being exposed to outside air in a cold district, the temperature of the solder joint rapidly increases from a low temperature to a high temperature.

When the electronic device is exposed to such a temperature difference, stress is concentrated on a solder joint having a small cross-sectional area due to a difference in thermal expansion coefficient between the electronic component constituting the electronic device and the board. Further, when the electronic device is externally vibrated under such an environment, further loads are applied to the solder joint. In addition, electronic devices such as mobile terminals are used for at least several years. As described above, the solder alloy constituting the solder joint is required to have high reliability so as not to cause a problem in the solder joint even when used in a severe environment for a long period of time.

For example, Patent Document 1 discloses a solder alloy for the object of suppressing crack development of a solder joint even in a severe environment such as a temperature difference or a vibration load, and also suppressing crack development in the vicinity of a joint interface with an electrode on which predetermined plating has not been performed. Patent Document 2 discloses a solder alloy for the object of suppressing crack development in a severe environment such as a temperature difference or a vibration load and suppressing occurrence of a lift-off phenomenon in a through hole. In order to achieve these objects, Patent Documents 1 and 2 disclose an Sn-Ag-Cu-Sb-Ni solder alloy obtained by adding Sb and Ni to an Sn-Ag-Cu solder alloy.

Similarly to Patent Document 1, Patent Document 3 discloses a solder alloy for the object of suppressing crack development of a solder joint even in a severe environment such as a temperature difference or a vibration load, and also suppressing crack development in the vicinity of a joint interface with an electronic component on which predetermined plating has not been performed. Similarly to Patent Document 2, Patent Document 4 discloses a solder alloy for the object of suppressing crack development in a severe environment such as a temperature difference or a vibration load, and further suppressing occurrence of a lift-off phenomenon in a through hole. In order to achieve these objects, Patent Documents 3 and 4 disclose an Sn-Ag-Cu-Sb-Bi-Ni solder alloy obtained by adding Sb, Bi and Ni to an Sn-Ag-Cu solder alloy.

Patent Document 5 discloses a solder alloy for the object of having excellent reliability and preventing adverse effects on acoustic quality. In order to achieve this object, Patent Document 5 discloses an Sn-Ag-Cu-Sb-Bi-Co-Fe solder alloy containing Sb, Bi, Co, and Fe in the Sn-Ag-Cu solder alloy.

### Citation List

### Patent Document

Patent Document 1: Japanese Unexamined Patent Application Publication No. JP 2017-170465 A
Patent Document 2: Japanese Unexamined Patent Application Publication No. JP 2019-058950 A
Patent Document 3: Japanese Patent Publication No.JP 6719443 B
Patent Document 4: Japanese Patent Publication No. JP 6795630 B
Patent Document 5: Japanese Patent Publication No. JP 6889387 B

### Summary of Invention

### Technical Problem

In paragraph 0008 of Patent Document 1, it is described that a solder alloy having high strength due to the addition of Bi has a disadvantage that stretchability is deteriorated and brittleness is increased. Further, paragraph 0010 of Patent Document 2 discloses that the Bi concentration increases in the vicinity of the interface with the land which is difficult to solidify in the fillet during cooling of the solder alloy. Moreover, in the same paragraph, it is described that the fillet is more difficult to solidify in the vicinity of the interface having a high Bi concentration, and when a contraction force acting perpendicularly on the board is generated, the surface peeling of the fillet from the land is more likely to occur. From these viewpoints, it is preferable that the solder alloys described in Patent Documents 1 and 2 do not contain Bi.

In addition, the solder alloys described in these documents contain a predetermined amount of Ni as an essential element, so that (Cu, Ni)₆Sn₅ is formed in the solder alloy and in the vicinity of the joint interface, and crack development is suppressed.

However, when the solder joint is exposed to the same environment as in the aging treatment, a phenomenon called "spalling" in which the alloy layer spalls from the interface occurs. This "spalling" is a phenomenon in which the intermetallic compound constituting the IMC layer formed at the joint interface solid-phase diffuses into the solder bulk when a corresponding heat treatment (temperature/time) is applied to the solder joint. When Ni that promotes refinement of the IMC layer is contained as in the solder alloys described in Patent Documents 1 to 4, "spalling" is likely to occur.

Generally, thermal conduction of metal is a heat transfer phenomenon mainly by energy transfer based on conduction electrons and a chain of atomic vibrations, with the contribution due to conduction electrons being large. Thus, a metal is a good conductor of heat. However, when the amount of the "spalled" intermetallic compound increases, the intermetallic compound having a relatively low thermal conductivity locally hinders the movement of conduction electrons and the chain of atomic vibrations. Consequently, thermal conduction of the solder joint is deteriorated. As described above, it is presumed that the decrease in the particle size of the intermetallic compound in the solder alloy containing Ni causes "spalling" to easily occur, and the thermal conductivity of the solder joint decreases.

Further, in a Bi-containing solder alloy, Bi is segregated by heat during driving of an electronic device, and thus it is known that a Bi phase is partially precipitated in the eutectic. This is a phenomenon that occurs even when the Bi content is less than 58 mass% at which the eutectic composition is obtained. Therefore, in the Bi-containing solder alloys described in Patent Documents 3 to 5, the solder alloy becomes brittle, and the solder joint is easily broken by drop impact.

It is described that the solder alloys described in Patent Documents 1 to 5 all exhibit an excellent effect even after a heat cycle test. According to this description, it is considered that the solder alloys described in Patent Documents 1 to 5 can withstand external stress caused by thermal expansion and thermal contraction. However, since the stress application speed in the heat cycle test is caused by the expansion speed and the contraction speed of the solder alloy and the board, the stress application speed is lower than the stress application speed at which stress is instantaneously applied like in drop impact. In an electronic device such as a conventional mobile terminal, dropping is inevitable, and therefore a solder joint capable of withstanding an external stress rapidly applied is required.

An object of the present invention is to provide a solder alloy, a solder ball, a solder paste, and a use of the solder alloy in a solder joint that have excellent in thermal conductivity, drop impact resistance, and heat cycle resistance.

### Solution to Problem

The present inventors have investigated the problems of the Sn-Ag-Cu-Sb-Ni solder alloys described in Patent Documents 1 and 2 in detail. Patent Documents 1 and 2 describe that, as a reason for adding Ni, (Cu,Ni)₆Sn₅ is formed in a molten solder alloy and dispersed in a base material, so that the crack development in the solder bulk is suppressed. Further, the same documents describe that Ni moves to the vicinity of a joint interface and form fine (Cu,Ni)₆Sn₅ during solder bonding, and thus growth of a Cu₃Sn layer at the joint interface is suppressed.

As described above, it is found that Ni of the Sn-Ag-Cu-Sb-Ni solder alloy contributes to the refinement of the structure of the solder alloy. However, it is considered that since (Cu,Ni)₆Sn₅ is dispersed in the base material, the thermal conductivity of the solder joint rather decreases.

Patent Documents 3 and 4 describe that, as a reason for adding Ni, there is a synergistic effect with Co in addition to the fact that (Cu,Ni)₆Sn₅ is formed in a molten solder alloy and dispersed in a base material, similarly to Patent Documents 1 and 2. It is also described that (Cu,Co)₆Sn₅ is dispersed in a base material to suppress crack development, and thus it is considered that the thermal conductivity is further reduced in an alloy composition containing Ni and Co at the same time. Since Sn-Ag-Cu-Sb-Bi-Ni disclosed in Patent Documents 3 and 4 contains Bi, there is a concern that the drop impact resistance is lowered due to Bi.

In view of this, the present inventors have studied to exclude Ni and Bi from the Sn-Ag-Cu-Sb-Bi-Ni solder alloy. However, since the Sn-Ag-Cu-Sb solder alloy does not contain Ni, the thermal conductivity is improved, but the structure of the solder alloy does not become fine, and the drop impact resistance and the heat cycle resistance are deteriorated. On the other hand, when the structure of the solder alloy is finer than necessary, the drop impact resistance and the heat cycle resistance are improved, but the intermetallic compound is spalled, so that the thermal conductivity is reduced. Therefore, the elements that make the alloy structure moderately fine have been studied in detail.

When Co is added to the Sn-Ag-Cu-Sb solder alloy, the thermal conductivity is presumed to decrease as described above. However, it has been found that when Ni is not contained, the thermal conductivity is not significantly reduced, but the drop impact resistance is poor because refinement is insufficient. Additionally, it has been found that when Fe is added to the Sn-Ag-Cu-Sb solder alloy, spalling is suppressed, and since the structure is made finer than that of Co although not as fine as Ni, the drop impact resistance is not greatly reduced, but the heat cycle property is insufficient. Here, Sn-Ag-Cu-Sb-Bi-Co-Fe disclosed in Patent Document 5 contains Bi. These solder alloys are useful inventions having an excellent acoustic quality. However, since the acoustic product is not assumed to be carried, it is not necessary to consider the drop impact.

The present inventors have studied elements and the contents thereof, with which the alloy structure becomes moderately fine in the Sn-Ag-Cu-Sb solder alloy, but the alloy structure does not become finer than necessary as in the case of adding Ni, and spalling of the intermetallic compound is suppressed. As a result, it has been found that there is an alloy composition relatively excellent in thermal conductivity, heat cycle resistance, and drop impact resistance in a solder alloy simultaneously containing Fe in addition to Co. However, it has also been found that there are alloy compositions in which these effects are not simultaneously exhibited to such an extent that there are no practical problems when adding only Co and Fe. In general, since all constituent elements of an alloy mutually contribute, it is rare that all the excellent effects are simultaneously exerted only by one element. Therefore, in addition to the contents of Co and Fe, the contents of Ag, Cu, and Sb were also investigated in detail at the same time.

Conventionally, as described above, considering the structure of the solder alloy, there is a contradictory relationship between refinement of the alloy structure and suppression of spalling. For this reason, it has been considered that it is difficult to provide a solder alloy that simultaneously satisfies three types of effects for thermal conductivity, drop impact resistance, and heat cycle resistance. In particular, in a solder alloy containing many kinds of elements to be added to Sn, since various compounds are formed and thus the thermal conductivity is low, there has been little study on the thermal conductivity heretofore. However, as a result of detailed studies, the present inventors have found that the thermal conductivity, the drop impact resistance, and the heat cycle resistance are simultaneously improved only when the contents of Ag, Cu, Sb, Co, and Fe are each within a predetermined range, and thus the present invention has been completed.

The present inventions obtained from these findings are defined in the appended set of claims.

### Brief Description of Drawings

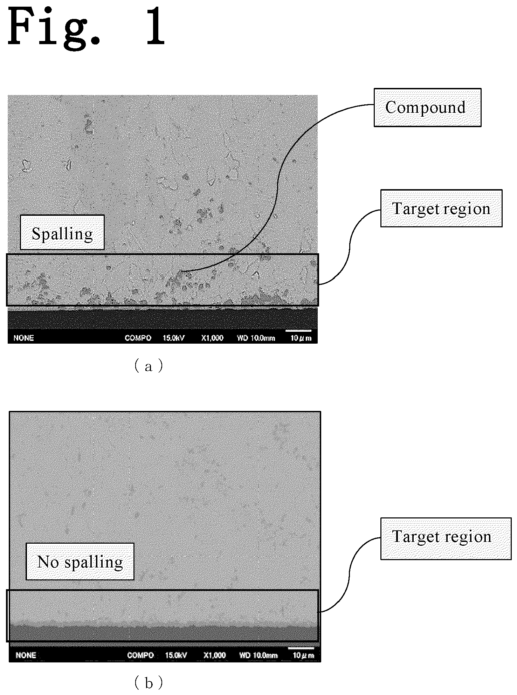

FIG. 1 is a cross-sectional SEM photograph of a solder joint, FIG. 1(a) is a cross-sectional SEM photograph of a solder joint using a solder alloy of Comparative Example 18, and FIG. 1(b) is a cross-sectional SEM photograph of a solder joint using a solder alloy of Example 16.

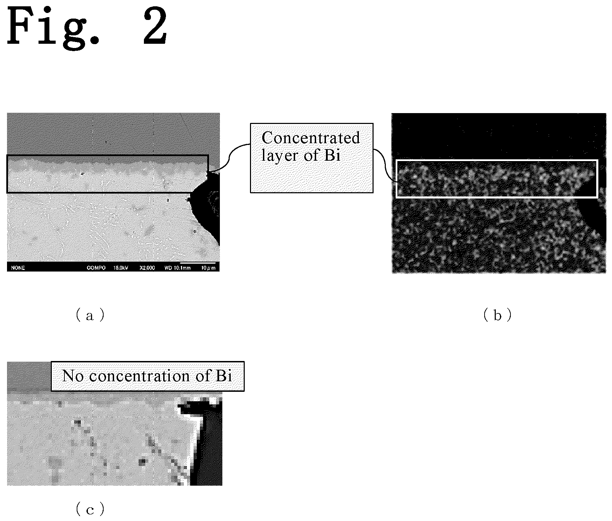

FIG. 2 is a cross-sectional SEM photograph of a solder joint, FIG. 2(a) is a cross-sectional SEM photograph of a solder joint using a solder alloy of Comparative Example 18, FIG. 2(b) is a photograph showing a result of cross-sectional mapping analysis in the solder joint using the solder alloy of Comparative Example 18, and FIG. 2(c) is a cross-sectional SEM photograph of a solder joint using a solder alloy of Example 16.

### Description of Embodiments

The present invention will be described in more detail below. In this description, "%" relating to the solder alloy composition refers to "mass%" unless otherwise specified.

### 1. Solder Alloy

### (1) Ag: 1.0 to 4.0%

Ag forms a network of Ag₃Sn, and contributes to improvement of heat cycle resistance and drop impact resistance. Ag also contributes to improvement of wettability of the molten solder. When the Ag content is less than 1.0%, the precipitation amount of Ag₃Sn is small, so that heat cycle resistance is deteriorated. In terms of the lower limit, the Ag content is 1.0% or more, preferably 2.0% or more, more preferably 3.0% or more, and further preferably 3.2% or more. On the other hand, when the Ag content is more than 4.0%, coarse primary crystals of Ag₃Sn are crystallized, and the drop impact resistance is deteriorated. Also, thermal conductivity may be deteriorated. In terms of the upper limit, the Ag content is 4.0% or less, preferably 3.8% or less, and more preferably 3.5% or less.

### (2) Cu: 0.10 to 1.00%

Cu forms a compound with Sn in the solder bulk and in the vicinity of the joint interface. Therefore, addition of Cu improves thermal conductivity, heat cycle resistance, and drop impact resistance. Further, wettability of the molten solder is also improved. When the Cu content is less than 0.10%, the amount of Cu₆Sn₅, etc., deposited is small, so that the drop impact resistance is deteriorated. Also, heat cycle resistance may be deteriorated. In terms of the lower limit, the Cu content is 0.10% or more, preferably 0.30% or more, and more preferably 0.50% or more. On the other hand, when the Cu content more than 1.00%, the intermetallic compound formed at the joint interface is spalled, so that the thermal conductivity is deteriorated. Drop impact resistance may be deteriorated. Further, the liquidus-line temperature rises. In terms of the upper limit, the Cu content is 1.00% or less, preferably 0.80% or less, and more preferably 0.70% or less.

### (3) Sb: 1.0 to 7.0%

Sb dissolves in Sn and also precipitates an SnSb compound, thus contributing to improvement of heat cycle resistance. When the Sb content is less than 1.0%, the precipitation amount of the SnSb compound is small, and the heat cycle resistance is not improved. In terms of the lower limit, the Sb content is 1.0% or more, preferably 2.0% or more, and more preferably 3.0% or more. On the other hand, when the Sb content more than 7.0%, due to an excessively high precipitation amount of SnSb, the thermal conductivity decreases. In terms of the upper limit, the Sb content is 7.0% or less, preferably 6.0% or less, more preferably 5.0% or less, and further preferably 4.0% or less.

### (4) Co: 0.001 to 0.030%

Co makes the Sn crystal grains finer and contributes to improvement in drop impact resistance and heat cycle resistance. When the Co content is less than 0.001%, Sn crystal grains do not become fine, and heat cycle resistance is not improved. Further, the liquidus-line temperature rises. In terms of the lower limit, the Co content is 0.001% or more, more preferably 0.003 mass% or more, and further preferably 0.006% or more. On the other hand, when the Co content more than 0.030%, the amount of the compound becomes too large, a coarser compound is generated, the structure is deteriorated, and the drop impact resistance is deteriorated. In terms of the upper limit, the Co content is 0.030% or less, preferably 0.010% or less, and more preferably 0.008% or less.

### (5) Fe: 0.005 to 0.050%

Fe makes the intermetallic compound precipitated at the joint interface fine to some extent, and also suppresses spalling of the intermetallic compound into the solder bulk. Therefore, the addition of Fe improves the thermal conductivity and the drop impact resistance. When the Fe content is less than 0.005%, the intermetallic compound precipitated at the joint interface cannot be made fine, and the drop impact resistance is deteriorated. In addition, since spalling of the intermetallic compound is not suppressed, the thermal conductivity is not improved. In terms of the lower limit, the Fe content is 0.005% or more, preferably 0.010% or more, and more preferably 0.020% or more. On the other hand, when the Fe content is more than 0.050%, the intermetallic compound does not become fine, and the drop impact resistance decreases. Further, the liquidus-line temperature rises. In terms of the upper limit, the Fe content is 0.050% or less, preferably 0.040% or less, and more preferably 0.025% or less.

### (6) In: 6.0% or less

In is an optional element that may be contained within a range in which the above-described effect in the solder alloy according to the present invention is not impaired. In terms of the upper limit, the In content is 6.0% or less, and preferably 5.0% or less. A lower limit is not particularly limited, but is preferably more than 0%, more preferably 0.1% or more, and further preferably 0.5% or more.

### (7) At least one of P, Ge, Ga, and Mn: 0.1% or less in total.

P, Ge, Ga, and Mn are optional elements that may be contained as an oxidation suppression effect of the solder alloy. These elements are 0.1% or less in total. A lower limit is not particularly limited, but may be 0.001% or more in total. In addition, the content of each of these elements is more preferably 0.001 to 0.1%, and further preferably 0.001 to 0.050%.

### (8) Balance: Sn

The balance of the solder alloy according to the present invention is Sn. In addition to the above-described elements, unavoidable impurity may be contained. Even when unavoidable impurity is contained, it does not affect the above-described effects.

Note that, in the solder alloy according to the present invention, it is better not to contain Ni and Bi. Since Ni makes the alloy structure finer than necessary, the intermetallic compound is spalled from the joint interface into the solder bulk, and the thermal conductivity decreases. Since Bi forms a concentrated layer in the solder alloy, drop impact resistance decreases and further, lift-off is caused.

### (9) Relations (1) and (2)

$0.040 ≦ Ag \times Cu \times Sb \times Co ≦ 0.075$ (1) $1.6 ≦ Ag \times Cu \times Sb \times Co / Fe ≦ 5.7$ (2)

Ag, Cu, Sb, Co, and Fe in the Relations (1) and (2) each represent the contents (mass%) thereof in the alloy composition.

The Relation (1) is a relation concerning an element having an effect of improving heat cycle resistance. In the Relation (1), the contents of Ag, Cu, and Sb are larger than Co, but Co greatly contributes to improvement of heat cycle resistance even if the content is small. Therefore, although the ratio of the Co content is about 1/10 to 1/10000 times as large as the contents of Ag, Cu, and Sb, it is considered that the degree of contribution to the characteristics of the solder alloy is about the same. Therefore, in order to further improve the heat cycle resistance characteristics in the present invention, it is not meaningful to calculate the total amount of the constituent elements of Relation (1), and it is preferable that the content is balanced.

In the calculation of the Relations (1) and (2), numerical values expressed in the actual measured values of the alloy composition shown in the following Tables 1 and 2 are directly used. That is, in the calculation of the Relations (1) and (2), all digits less than the number of significant digits in the actual measured values shown in the following Tables 1 and 2 are treated as 0. For example, when the Co content is "0.008" mass% as an actual measured value, the Co content used for the calculation of the Relations (1) and (2) does not have a range of 0.0075 to 0.0084%, but is handled as "0.008000...". The Relation (1) is calculated up to the third decimal place, and the Relation (2) is calculated up to the first decimal place.

Note that when the Relations (1) and (2) are calculated from the alloy compositions specifically disclosed in the patent documents and other documents described in the present specification, the Relations (1) and (2) are also handled in the same manner.

The Relation (2) is a relation concerning a ratio between an element contributing to improvement of drop impact resistance and an element contributing to improvement of thermal conductivity. The Relation (2) also contains Ag, Cu, and Sb which are relatively high contents and Co and Fe which are relatively low contents, similarly to the Relation (1). However, even though the Co content is relatively low, Co contributes to the refinement of the alloy structure, so that it can greatly contribute to the drop impact resistance. Although Fe is about the same as the range of the Co content, Fe contributes to the refinement of the alloy structure than Co and also contributes to suppression of spalling. In addition, Fe is an element that can actively improve the thermal conductivity among elements constituting the solder alloy according to the present invention. In order to be able to exhibit all of thermal conductivity, heat cycle resistance, and drop impact resistance at a higher level, it is desirable to satisfy the Relation (2) in which thermal conductivity and heat cycle resistance are considered, in addition to the Relation (1).

Further, when In is contained, it is desirable that In contents are 4.0% or less in addition to satisfying the Relations (1) and (2). Even if the In content is 0% in the alloy composition, the above effect is exhibited when the Relations (1) and (2) are satisfied. Since In may form a compound with Sn, when the In content is 4.0% or less, a decrease in thermal conductivity due to the formed compound is suppressed, and the effect when the Relations (1) and (2) are satisfied is more easily exhibited.

As described above, in the alloy, all the constituent elements do not function individually, but all the constituent elements form one object as a whole. Therefore, it is rare that all the excellent effects are simultaneously exerted only by one element. Therefore, as described above, in order to exhibit more excellent characteristics within the range of the optimum content of each constituent element, it is necessary to investigate the constituent elements as a whole. In the solder alloy according to the present invention, in order to simultaneously satisfy all requirements of the heat cycle resistance, the thermal conductivity, and the drop impact resistance at a higher level, the In content is preferably 4.0% or less, and the Relations (1) and (2) are preferably satisfied.

In terms of the lower limit, the Relation (1) is preferably 0.040 or more, more preferably 0.042 or more, further preferably 0.043 or more, further more preferably 0.046 or more, particularly preferably 0.047 or more, most preferably 0.050 or more, and may be 0.055 or more. In terms of the upper limit, the Relation (1) is preferably 0.075 or less, more preferably 0.070 or less, further preferably 0.069 or less, further more preferably 0.058 or less, and particularly preferably 0.056 or less.

The Relation (1) is preferably 0.042 to 0.070, more preferably 0.043 to 0.069, further preferably 0.046 to 0.058, and particularly preferably 0.047 to 0.056.

In terms of the lower limit, the Relation (2) is preferably 1.6 or more, more preferably 1.7 or more, further preferably 1.8 or more, further more preferably 1.9 or more, particularly preferably 2.0 or more, most preferably 2.2 or more, and may be 2.3 or more. In terms of the upper limit, the Relation (2) is preferably 5.7 or less, more preferably 5.6 or less, further preferably 5.2 or less, further more preferably 3.7 or less, particularly preferably 3.5 or less, and most preferably 2.7 or less.

The Relation (2) is preferably 1.7 to 5.6, more preferably 1.8 to 5.2, further preferably 1.9 to 3.7, and particularly preferably 2.0 to 3.5. It is most preferably 2.2 to 2.7 and may be 2.3 to 2.7.

In terms of the upper limit, In is preferably 4.0% or less, more preferably 3.0% or less, further preferably 2.0% or less, and most preferably 1.0% or less. In terms of the lower limit, In is preferably 0% or more, more preferably 0.3% or more, further preferably 0.5% or more, and most preferably 0.7% or more.

### 2. Solder Ball

The solder alloy according to the present invention can be used as a solder ball. The solder ball according to the present invention is used for forming bumps on an electrode or a board of a semiconductor package such as a ball grid array (BGA). The diameter of the solder ball according to the present invention is preferably within a range of 1 to 1000 µm. The solder ball can be manufactured by a general solder ball manufacturing method.

### 3. Solder Paste

The solder alloy according to the present invention can be used as a solder paste. The solder paste is obtained by mixing a solder alloy powder with a small amount of flux to form a paste. The solder alloy according to the present invention may be used as a solder paste for mounting an electronic component on a printed circuit board by a reflow soldering method. The flux used for the solder paste may be either a water-soluble flux or a water-insoluble flux. Rosin-based fluxes, which are typically rosin-based, water-insoluble fluxes, are used.

### 4. Solder Joint

A solder joint connects an electronic component and a board (interposer) thereof, or joins and connects an electronic component and a printed board. That is, the solder joint refers to a connection portion of an electrode, and can be formed using general soldering conditions.

It is desirable as long as a joining method using the solder alloy according to the present invention is performed in the usual manner by using, for example, a reflow method. The heating temperature may be appropriately adjusted according to the heat resistance of the chip or the liquidus-line temperature of the solder alloy. In addition, in the case of joining using the solder alloy according to the present invention, the structure can be made finer taking a cooling rate for solidification into consideration. For example, a solder joint is cooled at a cooling rate of 2 to 3°C/s or more. Other joining conditions can be adjusted as appropriate according to the alloy composition of the solder alloy.

As the solder alloy according to the present invention, by using a low α-ray material as a raw material, a low α-ray alloy can be produced. Such a low α-ray alloy can prevent a soft error when used for forming solder bumps around a memory.

### [Examples]

Solder alloys having the alloy compositions shown in Tables 1 and 2 were prepared, and the thermal conductivity was measured as Evaluation 1, the resistance value after the heat cycle test was measured as Evaluation 2, and the resistance value after the drop impact test was measured as Evaluation 3.

### - Evaluation 1: Measurement of thermal conductivity

Each of the solder alloys in Tables 1 and 2 was cast, then processed into a size of about φ10 mm × 3 mm^{t} as a test piece shape, and the thermal conductivity was measured using a laser flash method in accordance with JIS R 1611. As a measuring instrument, LF/TCM-8510B (trade name) manufactured by Rigaku Corporation was used. The measurement temperature was 23±1°C. A thermal conductivity of 52 W/m/K or more was judged as "Excellent", a thermal conductivity of 50 W/m/K or more and less than 52 W/m/K was judged as "Good", and a thermal conductivity of less than 50 W/m/K was judged as "Poor".

### - Evaluation 2: Measurement of resistance value after heat cycle test (TCT)

Each of the solder alloys in Tables 1 and 2 was atomized to prepare solder powder. A soldering flux containing pine resin, a solvent, an activator, a thixotropic agent, an organic acid, etc., was mixed to prepare a solder paste of each solder alloy. The solder paste was printed on a printed circuit board (material: FR-4) having a thickness of 0.8 mm with a metal mask having a thickness of 100 µm, 15 BGA components were then mounted on a mounter, and reflow-soldered under conditions of a maximum temperature of 240°C and a retention time of 60 seconds to prepare a test board.

The test board soldered with each solder alloy was placed in a heat cycle test apparatus set under conditions of a low temperature of -40°C, a high temperature of +125°C, and a retention time of 10 minutes, and the number of cycles at the time when the resistance value of at least one BGA component exceeded 15 Ω from 3 to 5 Ω as an initial resistance value was determined. 750 cycles or more were judged as "Excellent", 700 to 749 cycles were judged as "Good", and less than 700 cycles were judged as "Poor".

### - Evaluation 3: Measurement of resistance value after drop impact test

Each of the solder alloys in Tables 1 and 2 was atomized to prepare solder powder. A soldering flux containing pine resin, a solvent, an activator, a thixotropic agent, an organic acid, etc., was mixed to prepare a solder paste of each solder alloy. The solder paste was printed on a printed circuit board (material: FR-4) having a thickness of 0.8 mm with a metal mask having a thickness of 100µm, 5 LGA components were then mounted on a mounter, and reflow-soldered under conditions of a maximum temperature of 240°C and a retention time of 60 seconds to prepare a test board. Thereafter, the LGA component was cut into five singulated pieces.

Next, both ends of each board were fixed to the pedestal with bolts so that the singulated LGA components faced the pedestal side, respectively. In this state, according to the JEDEC standard, an impact with an acceleration of 1500G was applied to evaluate drop impact resistance. In this drop test, a situation in which a crack was developing in the solder joint was confirmed based on whether the electric resistance value increased by 50% from the initial value. In the determination on the crack development, when the electric resistance value did not increase by 50% from the initial value after dropping 85 times or more, it was judged as "Excellent", when the number of drops when the electric resistance value exceeded 50% from the initial value was 80 to 84 times, it was judged as "Good", and when the number of drops when the electric resistance value exceeded 50% from the initial value was 79 times or less, it was judged as "Poor".

The evaluation results are shown in Tables 1 and 2.

**[Table 1]**

| | Alloy Composition (mass%) | | | | | | | | | | | | | Relation (1) | Relation (2) | Thermal Conductivity | TCT | Drop Impact | Overall Evaluation |
|---|---|---|---|---|---|---|---|---|---|---|---|---|---|---|---|---|---|---|---|
| | Sn | Ag | Cu | Sb | Co | Fe | In | P | Ge | Ga | Mn | Bi | Ni | | | | | | |
| Example 1 | Bal. | 1.0 | 0.6 | 3.0 | 0.008 | 0.025 | | | | | | | | 0.014 | 0.6 | Excellent | Good | Excellent | Good |
| Example 2 | Bal. | 2.0 | 0.6 | 3.0 | 0.008 | 0.025 | | | | | | | | 0.029 | 1.2 | Excellent | Good | Excellent | Good |
| Example 3 | Bal. | 3.0 | 0.6 | 3.0 | 0.008 | 0.025 | | | | | | | | 0.043 | 1.7 | Excellent | Excellent | Excellent | Excellent |
| Example 4 | Bal. | 3.2 | 0.6 | 3.0 | 0.008 | 0.025 | | | | | | | | 0.046 | 1.8 | Excellent | Excellent | Excellent | Excellent |
| Example 5 | Bal. | 3.5 | 0.6 | 3.0 | 0.008 | 0.025 | | | | | | | | 0.050 | 2.0 | Excellent | Excellent | Excellent | Excellent |
| Example 6 | Bal. | 3.5 | 0.7 | 3.5 | 0.008 | 0.025 | | | | | | | | 0.069 | 2.7 | Excellent | Excellent | Excellent | Excellent |
| Example 7 | Bal. | 3.8 | 0.6 | 3.0 | 0.008 | 0.025 | | | | | | | | 0.055 | 2.2 | Excellent | Excellent | Excellent | Excellent |
| Example 8 | Bal. | 4.0 | 0.6 | 3.0 | 0.008 | 0.025 | | | | | | | | 0.058 | 2.3 | Excellent | Excellent | Excellent | Excellent |
| Example 9 | Bal. | 3.9 | 0.1 | 3.0 | 0.008 | 0.025 | | | | | | | | 0.009 | 0.4 | Excellent | Good | Excellent | Good |
| Example 10 | Bal. | 3.9 | 0.3 | 3.0 | 0.008 | 0.025 | | | | | | | | 0.028 | 1.1 | Excellent | Good | Excellent | Good |
| Example 11 | Bal. | 3.9 | 0.5 | 3.0 | 0.008 | 0.025 | | | | | | | | 0.047 | 1.9 | Excellent | Excellent | Excellent | Excellent |
| Example 12 | Bal. | 3.9 | 0.8 | 3.0 | 0.008 | 0.025 | | | | | | | | 0.075 | 3.0 | Excellent | Excellent | Excellent | Excellent |
| Example 13 | Bal. | 3.9 | 1.0 | 3.0 | 0.008 | 0.025 | | | | | | | | 0.094 | 3.7 | Excellent | Excellent | Good | Good |
| Example 14 | Bal. | 3.9 | 0.6 | 1.0 | 0.008 | 0.025 | | | | | | | | 0.019 | 0.7 | Excellent | Good | Excellent | Good |
| Example 15 | Bal. | 3.9 | 0.6 | 2.0 | 0.008 | 0.025 | | | | | | | | 0.037 | 1.5 | Excellent | Good | Excellent | Good |
| Example 16 | Bal. | 3.9 | 0.6 | 3.0 | 0.008 | 0.025 | | | | | | | | 0.056 | 2.2 | Excellent | Excellent | Excellent | Excellent |
| Example 17 | Bal. | 3.9 | 0.7 | 4.0 | 0.008 | 0.025 | | | | | | | | 0.087 | 3.5 | Excellent | Excellent | Good | Good |
| Example 18 | Bal. | 3.9 | 0.6 | 5.0 | 0.008 | 0.025 | | | | | | | | 0.094 | 3.7 | Good | Excellent | Good | Good |
| Example 19 | Bal. | 3.9 | 0.6 | 7.0 | 0.008 | 0.025 | | | | | | | | 0.131 | 5.2 | Good | Good | Good | Good |
| Example 20 | Bal. | 3.9 | 0.6 | 3.0 | 0.001 | 0.025 | | | | | | | | 0.007 | 0.3 | Excellent | Good | Excellent | Good |
| Example 21 | Bal. | 3.9 | 0.6 | 3.0 | 0.003 | 0.025 | | | | | | | | 0.021 | 0.8 | Excellent | Good | Excellent | Good |
| Example 22 | Bal. | 3.9 | 0.6 | 3.0 | 0.006 | 0.025 | | | | | | | | 0.042 | 1.7 | Excellent | Excellent | Excellent | Excellent |
| Example 23 | Bal. | 3.9 | 0.6 | 3.0 | 0.010 | 0.025 | | | | | | | | 0.070 | 2.8 | Excellent | Excellent | Excellent | Excellent |
| Example 24 | Bal. | 3.9 | 0.6 | 3.0 | 0.030 | 0.025 | | | | | | | | 0.211 | 8.4 | Excellent | Excellent | Good | Good |
| Example 25 | Bal. | 3.9 | 0.6 | 3.0 | 0.008 | 0.005 | | | | | | | | 0.056 | 11.2 | Excellent | Excellent | Good | Good |
| Example 26 | Bal. | 3.9 | 0.6 | 3.0 | 0.008 | 0.010 | | | | | | | | 0.056 | 5.6 | Excellent | Excellent | Excellent | Excellent |
| Example 27 | Bal. | 3.9 | 0.6 | 3.0 | 0.008 | 0.020 | | | | | | | | 0.056 | 2.8 | Excellent | Excellent | Excellent | Excellent |
| Example 28 | Bal. | 3.9 | 0.6 | 3.0 | 0.008 | 0.040 | | | | | | | | 0.056 | 1.4 | Excellent | Excellent | Good | Good |
| Example 29 | Bal. | 3.9 | 0.6 | 3.0 | 0.008 | 0.050 | | | | | | | | 0.056 | 1.1 | Excellent | Excellent | Good | Good |
| Example 30 | Bal. | 3.9 | 0.6 | 3.0 | 0.008 | 0.025 | 1.0 | | | | | | | 0.056 | 2.2 | Excellent | Excellent | Excellent | Excellent |
| Example 31 | Bal. | 3.9 | 0.6 | 3.0 | 0.008 | 0.025 | 5.0 | | | | | | | 0.056 | 2.2 | Good | Excellent | Excellent | Good |
| Example 32 | Bal. | 3.9 | 0.6 | 3.0 | 0.008 | 0.025 | | 0.001 | | | | | | 0.056 | 2.2 | Excellent | Excellent | Excellent | Excellent |
| Example 33 | Bal. | 3.9 | 0.6 | 3.0 | 0.008 | 0.025 | | 0.1 | | | | | | 0.056 | 2.2 | Excellent | Excellent | Excellent | Excellent |
| Example 34 | Bal. | 3.9 | 0.6 | 3.0 | 0.008 | 0.025 | | | 0.001 | | | | | 0.056 | 2.2 | Excellent | Excellent | Excellent | Excellent |
| Example 35 | Bal. | 3.9 | 0.6 | 3.0 | 0.008 | 0.025 | | | 0.1 | | | | | 0.056 | 2.2 | Excellent | Excellent | Excellent | Excellent |
| Example 36 | Bal. | 3.9 | 0.6 | 3.0 | 0.008 | 0.025 | | | | 0.001 | | | | 0.056 | 2.2 | Excellent | Excellent | Excellent | Excellent |
| Example 37 | Bal. | 3.9 | 0.6 | 3.0 | 0.008 | 0.025 | | | | 0.1 | | | | 0.056 | 2.2 | Excellent | Excellent | Excellent | Excellent |
| Example 38 | Bal. | 3.9 | 0.6 | 3.0 | 0.008 | 0.025 | | | | | 0.001 | | | 0.056 | 2.2 | Excellent | Excellent | Excellent | Excellent |
| Example 39 | Bal. | 3.9 | 0.6 | 3.0 | 0.008 | 0.025 | | | | | 0.05 | | | 0.056 | 2.2 | Excellent | Excellent | Excellent | Excellent |

**[Table 2]**

| | Alloy Composition (mass%) | | | | | | | | | | | | | Relation (1) | Relation (2) | Thermal Conductivity | TCT | Drop Impact | Overall Evaluation |
|---|---|---|---|---|---|---|---|---|---|---|---|---|---|---|---|---|---|---|---|
| | Sn | Ag | Cu | Sb | Co | Fe | In | P | Ge | Ga | Mn | Bi | Ni | | | | | | |
| Example 40 | Bal. | 3.9 | 0.6 | 3.0 | 0.008 | 0.025 | 1.0 | 0.001 | 0.001 | 0.001 | 0.001 | | | 0.056 | 2.2 | Excellent | Excellent | Excellent | Excellent |
| Example 41 | Bal. | 3.5 | 0.7 | 3.5 | 0.008 | 0.005 | | | | | | | | 0.069 | 13.7 | Excellent | Good | Good | Good |
| Comparative Example 1 | Bal. | 3.9 | 0.6 | 3.0 | 0 | 0 | | | | | | | | 0.000 | - | Excellent | Poor | Poor | Poor |
| Comparative Example 2 | Bal. | 3.4 | 0.7 | 3.0 | 0.008 | 0 | | | | | | | | 0.057 | | Excellent | Poor | Poor | Poor |
| Comparative Example 3 | Bal. | 3.4 | 0.7 | 3.0 | 0 | 0.025 | | | | | | | | 0.000 | | Excellent | Poor | Good | Poor |
| Comparative Example 4 | Bal. | 0.5 | 0.7 | 3.5 | 0.008 | 0.025 | | | | | | | | 0.010 | 0.4 | Good | Poor | Good | Poor |
| Comparative Example 5 | Bal. | 4.5 | 0.7 | 3.5 | 0.008 | 0.025 | | | | | | | | 0.088 | 3.5 | Good | Good | Poor | Poor |
| Comparative Example 6 | Bal. | 3.5 | 0.06 | 3.5 | 0.008 | 0.025 | | | | | | | | 0.006 | 0.2 | Good | Good | Poor | Poor |
| Comparative Example 7 | Bal. | 3.5 | 1.3 | 3.5 | 0.008 | 0.025 | | | | | | | | 0.127 | 5.1 | Poor | Good | Good | Poor |
| Comparative Example 8 | Bal. | 3.5 | 0.7 | 0.8 | 0.008 | 0.025 | | | | | | | | 0.016 | 0.6 | Good | Poor | Good | Poor |
| Comparative Example 9 | Bal. | 3.5 | 0.7 | 8.0 | 0.008 | 0.025 | | | | | | | | 0.157 | 6.3 | Poor | Good | Good | Poor |
| Comparative Example 10 | Bal. | 3.5 | 0.7 | 3.5 | 0.0004 | 0.025 | | | | | | | | 0.003 | 0.1 | Good | Poor | Good | Poor |
| Comparative Example 11 | Bal. | 3.5 | 0.7 | 3.5 | 0.042 | 0.025 | | | | | | | | 0.360 | 14.4 | Good | Good | Poor | Poor |
| Comparative Example 12 | Bal. | 3.5 | 0.7 | 3.5 | 0.008 | 0.002 | | | | | | | | 0.069 | 34.3 | Good | Good | Poor | Poor |
| Comparative Example 13 | Bal. | 3.5 | 0.7 | 3.5 | 0.008 | 0.080 | | | | | | | | 0.069 | 0.9 | Good | Good | Poor | Poor |
| * Underlined indicates that it is outside the scope of the present invention. | | | | | | | | | | | | | | | | | | | |
| Comparative Example 14 | Bal. | 3.3 | 0.7 | 7.0 | 0.010 | 0.026 | | | | | | 2.0 | | 0.162 | 6.2 | Good | Excellent | Poor | Poor |
| Comparative Example 15 | Bal. | 3.0 | 0.5 | 4.0 | 0.008 | 0.050 | | | | | | | 0.03 | 0.048 | 1.0 | Poor | Excellent | Good | Poor |
| Comparative Example 16 | Bal. | 3.5 | 0.7 | 3.5 | 0.010 | 0.005 | | | | 0.005 | | | 0.02 | 0.086 | 17.2 | Poor | Excellent | Good | Poor |
| Comparative Example 17 | Bal. | 3.0 | 0.7 | 3.5 | 0.008 | 0.050 | | | | | | 0.7 | 0.03 | 0.059 | 1.2 | Poor | Excellent | Good | Poor |
| Comparative Example 18 | Bal. | 3.0 | 0.7 | 3.0 | 0.008 | 0.050 | | | | | | 3.2 | 0.03 | 0.050 | 1.0 | Poor | Excellent | Poor | Poor |

| | | | | | | | | | | | | | | | | | | | |
|---|---|---|---|---|---|---|---|---|---|---|---|---|---|---|---|---|---|---|---|
| * Underlined indicates that it is outside the scope of the present invention. | | | | | | | | | | | | | | | | | | | |

As is clear from Tables 1 and 2, in Examples 1 to 41, since the contents of the constituent elements were all appropriate, results are showed in which the thermal conductivity was high, and the number of times of the TCT and the drop impact test was large. In particular, it was confirmed that Examples 3 to 8, 11, 12, 16, 22, 23, 26, 27, 30, and 32 to 40 satisfying the Relations (1) and (2) showed particularly excellent results in all evaluations. Note that in Example 31, the thermal conductivity was "Good" since the In content was 5%.

On the other hand, in Additional Comparative Example 1, since Co and Fe were not contained, TCT and drop impact resistance were poor. In Comparative Example 4, due to a low content of Ag, heat cycle resistance was poor. In Comparative Example 5, due to a high content of Ag, drop impact resistance was poor. In Comparative Example 6, due to a low content of Cu, drop impact resistance was poor. In Comparative Example 7, due to a high content of Cu, the intermetallic compound at the joint interface was spalled in the solder bulk, and the thermal conductivity decreased.

In Comparative Example 8, due to a low content of Sb, heat cycle resistance was poor. In Comparative Example 9, due to a high content of Sb, thermal conductivity was poor. In Comparative Example 10, due to a low content of Co, heat cycle resistance was poor. In Comparative Example 11, due to a high content of Co, drop impact resistance was poor.

In Comparative Examples 12 and 13, since the Fe content was not appropriate, drop impact resistance was poor. In Comparative Example 14, since Bi was contained, drop impact properties was poor. In Comparative Examples 15 to 17, since Ni was contained, thermal conductivity was poor. Further, in Comparative Example 18, since Bi was contained, drop impact resistance was poor.

Results of checking whether spalling occurred are shown in FIG. 1. FIG. 1 is a cross-sectional SEM photograph of a solder joint, FIG. 1(a) is a cross-sectional SEM photograph of a solder joint using a solder alloy of Comparative Example 18, and FIG. 1(b) is a cross-sectional SEM photograph of a solder joint using a solder alloy of Example 16. Five samples were prepared for each of the examples and the comparative examples, and an alloy layer and a region of 0 to 20 µm from a surface treatment interface (region illustrated as "target region" in FIG. 1) were observed.

A powder of each of the solder alloys described in Example 16 and Comparative Example 18 was prepared by an atomizing method. The powder of the alloy was mixed with a flux ("GLV" made by Senju Metal Industry Co., Ltd.) containing rosin, a solvent, a thixotropic agent, and an organic acid, etc., to prepare a solder paste. The solder paste containing the alloy powder of the solder paste in an amount of 88 mass% and the flux in an amount of 12 mass% was printed on Cu lands of six layers of printed circuit boards (FR-4, Cu-OSP) with a metal mask of 150µm, and then a chip resistor of 3216 was mounted with a mounter. Then, a test board was produced by performing reflow soldering by melting the solder paste under heating conditions where a maximum temperature was 245°C and a holding time was 40 seconds.

After that, the test board was cut out and polished, and the vicinity of a joint interface in a cross section was observed at a magnification of 1000. A total area and an area of the CuSn-based compound were calculated by using image analysis software. As the image analysis software, Scandium was used. By using results of calculation of the respective areas, an area ratio of the CuSn-based compound was calculated according to (area ratio of CuSn-based compound) (%) = (area of CuSn-based compound) × 100 / (area of target region).

As is clear from FIG. 1(b), in the target region in Example 16, the ratio of the CuSn-based compound was 0%. FIG. 1(a) illustrates an image of Comparative Example 18, and the ratio of the CuSnNi-based compound was 15 to 20% in the target region. Thus, in the example, it was found that no compound spalling occurred. The results of other examples were similar to those of Example 16.

FIG. 2 is a cross-sectional SEM photograph of a solder joint, FIG. 2(a) is a cross-sectional SEM photograph of a solder joint using a solder alloy of Comparative Example 18, FIG. 2(b) is a photograph showing a result of cross-sectional mapping analysis in the solder joint using the solder alloy of Comparative Example 18, and FIG. 2(c) is a cross-sectional SEM photograph of a solder joint using a solder alloy of Example 16.

A test board was prepared in the same manner as in FIG. 1, and the vicinity of the joint interface in the cross section was photographed with an FE-SEM at a magnification of 350. Then, the cross-section was subjected to qualitative analysis with EDS attached to the SEM, Bi was identified, and surface analysis of Bi was measured using image analysis software (manufactured by EMSIS GmbH: Scandium). FIGS. 2(a) and 2(c) are cross-sectional SEM photographs, but it is difficult to confirm the presence or absence of the Bi concentrated layer in these SEM photographs. On the other hand, in FIG. 2(b), it has been found that the Bi-concentrated layer is formed in the vicinity of the joint interface, and thus the Bi-concentrated layer is a cause of poor drop impact properties due to embrittlement.

### Industrial Applicability

The solder according to the present invention can be used in consumer electronic devices such as personal computers, and for example, the solder is also used in an in-vehicle electronic circuit such as an engine control unit (ECU) which is an electronic circuit for controlling an automobile by a computer for improving fuel efficiency, and exhibits an excellent effect.

## Claims

1. A solder alloy having an alloy composition consisting of, by mass%, Ag: 1.0 to 4.0%, Cu: 0.10 to 1.00%, Sb: 1.0 to 7.0%, Co: 0.001 to 0.030%, Fe: 0.005 to 0.050%, optionally at least one of P, Ge, Ga, and Mn: 0.1% or less in total, and optionally In: 6.0% or less, with the balance being Sn and unavoidable impurities.

2. The solder alloy according to claim 1, wherein the alloy composition comprises In: 0 to 4.0% and satisfies the following Relations (1) and (2): $0.040 ≦ Ag \times Cu \times Sb \times Co ≦ 0.075$ (1) $1.6 ≦ Ag \times Cu \times Sb \times Co / Fe ≦ 5.7$ (2) wherein Ag, Cu, Sb, Co, and Fe in the Relations (1) and (2) each represent the contents as mass% thereof in the alloy composition.

3. A solder ball consisting of the solder alloy according to claim 1 or 2.

4. A solder paste comprising a solder powder consisting of the solder alloy according to claim 1 or 2.

5. Use of the solder alloy according to claim 1 or 2 in a solder joint.

## Patentansprüche

1. Lotlegierung mit einer Legierungszusammensetzung, bestehend aus, in Masse-%, Ag: 1,0 bis 4,0%, Cu: 0,10 bis 1,00%, Sb: 1,0 bis 7,0%, Co: 0,001 bis 0,030%, Fe: 0,005 bis 0,050%, optional mindestens einem von P, Ge, Ga und Mn: insgesamt 0,1% oder weniger, und optional In: 6,0% oder weniger, wobei der Rest Sn und unvermeidbare Verunreinigungen ist.

2. Lotlegierung nach Anspruch 1, wobei die Legierungszusammensetzung In: 0 bis 4,0% umfasst und die folgenden Beziehungen (1) und (2) erfüllt: $0 , 040 ≦ Ag \times Cu \times Sb \times Co ≦ 0,075$ (1) $1 , 6 ≦ Ag \times Cu \times Sb \times Co / Fe ≦ 5,7$ (2) wobei Ag, Cu, Sb, Co und Fe in den Beziehungen (1) und (2) jeweils die Gehalte als Masse-% davon in der Legierungszusammensetzung darstellen.

3. Lotkugel, bestehend aus der Lotlegierung nach Anspruch 1 oder 2.

4. Lotpaste, umfassend ein Lotpulver, bestehend aus der Lotlegierung nach Anspruch 1 oder 2.

5. Verwendung der Lotlegierung nach Anspruch 1 oder 2 in einer Lötverbindung.

## Revendications

1. Alliage de soudure ayant une composition d'alliage comprenant, en pourcentage massique : 1,0 à 4,0 % d'Ag, 0,10 à 1,00 % de Cu, 1,0 à 7,0 % de Sb, 0,001 à 0,030 % de Co, 0,005 à 0,050 % de Fe, éventuellement au moins l'un parmi P, Ge, Ga et Mn, de 0,1 % ou moins au total, et éventuellement de l'In, de 6,0 % ou moins, le reste étant du Sn et des impuretés inévitables.

2. Alliage de soudure selon la revendication 1, dans lequel la composition de l'alliage comprend 0 à 4,0 % d'In et satisfait les Relations (1) et (2) suivantes : $0 , 040 ≦ Ag \times Cu \times Sb \times Co ≦ 0,075$ (1) $1 , 6 ≦ Ag \times Cu \times Sb \times Co / Fe ≦ 5,7$ (2) dans lequel Ag, Cu, Sb, Co et Fe dans les Relations (1) et (2) représentent chacun les teneurs en pourcentage massique dans la composition de l'alliage.

3. Bille de soudure constituée de l'alliage de soudure selon la revendication 1 ou 2.

4. Pâte de soudure comprenant une poudre de soudure constituée de l'alliage de soudure selon la revendication 1 ou 2.

5. Utilisation de l'alliage de soudure selon la revendication 1 ou 2 dans un joint de soudure.
